(19) Europäisches Patentamt
European Patent Office
Office européen des brevets

(11) **EP 2 061 160 A1**

(12) **EUROPEAN PATENT APPLICATION**

(43) Date of publication:
**20.05.2009 Bulletin 2009/21**

(51) Int Cl.:
**H04B 7/06** $^{(2006.01)}$

(21) Application number: **07120679.1**

(22) Date of filing: **14.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Sony Corporation**
**Minato-ku**
**Tokyo 108-0075 (JP)**

(72) Inventors:
• **Schneider, Daniel**
**70327, Stuttgart (DE)**
• **Stadelmeier, Lothar**
**70327, Stuttgart (DE)**
• **Schwager, Andreas**
**70327, Stuttgart (DE)**

(74) Representative: **Körber, Martin Hans**
**Mitscherlich & Partner**
**Sonnenstraße 33**
**80331 München (DE)**

(54) **MIMO-Eigenbeamforming without feedback of channel state information**

(57)     The present invention relates to the fields of Eigenbeamforming, especially in the case of a powerline communication system. The present invention especially relates to a transceiver (1), a communication system (3) comprising at least one transceiver (1) and a method of communication between a first communication device (M1) and a second communication device (M2) via a bi-directional communication channel (4). The transceiver (1), communication system (3) and method assume a communication channel (4) which is, at least to some extent, reciprocal. The transceiver (1) according to the present invention comprises a receiving unit (14) adapted to receive first training data (100), a channel estimator (18) adapted to calculate a first eigenbeamforming precoding matrix based on the received first training data (100) and an eigenbeamformer (8) adapted to precode first payload data based on the calculated first precoding matrix and a transmitting unit (10) adapted to transmit the precoded first payload data (104).

Fig. 7

# EP 2 061 160 A1

**Description**

Field of the invention

The present invention relates to the fields of eigenbeamforming, especially in the case of a powerline communication system. The present invention especially relates to a transceiver, a communication system comprising at least one transceiver and a method of communication between a first communication device and a second communication device via a bidirectional communication channel.

Description of the state of the art

Eigenbeamforming has been proposed for wireless MIMO systems in order to increase the bandwidth. State of the art eigenbeamforming schemes require feedback of channel state information which decreases the effective data rate.

Power Line Communication (PLC), which is sometimes also called Mains Communication, Power Line Transmission (PLT), Broadband Powerline (BPL), Powerband or Power Line Networking (PLN), is a general term describing systems for using power distribution wires for simultaneous distribution of data. For example, for indoor applications PLC equipment can use household electrical power wiring as the transmission medium.

The problem to be solved by the present invention is to provide for an increased effective data rate in eigenbeamforming communication systems.

Brief description of the invention

This problem is solved by a transceiver according to claim 1, comprising a receiving unit adapted to receive first training data, a channel estimator adapted to calculate a first eigenbeamforming precoding matrix based on the received first training data and an eigenbeamformer adapted to precode first payload data based on the calculated first precoding matrix and a transmitting unit adapted to transmit the precoded first payload data.

Since the eigenbeamformer is adapted to precode based on a precoding matrix determined by the channel estimator, transmission of channel state information can be ommited and the data rate is increased.

Advantageously, said receiving unit is adapted to receive second payload data, said second payload data being precoded, said channel estimator is adapted to calculate first channel state information based on said received first training data, said transceiver comprising a decoder adapted to decode the received precoded second payload data based on said first channel state information.

Since decoding is performed without reception of any channel state information, transmission of the channel state information can be omitted and the data rate is further increased.

Advantageously in this case, said first channel state information based on which said decoder decodes said received precoded second payload data comprises an eigenbeamforming detection matrix. Further advantageous in this case, said second payload data is precoded based on a second precoding eigenbeamforming matrix, said transmitting unit is adapted to transmit second training data and said second eigenbeamforming precoding matrix is based on the transmitted second training data.

Alternatively, said receiving unit is adapted to receive fourth training data, said fourth training data being precoded, said receiving unit is adapted to receive second payload data, said second payload data being precoded, said channel estimator is adapted to calculate second channel state information based on the received fourth training data, said transceiver comprising a decoder adapted to decode the received precoded second payload data based on said second channel state information.

Since decoding is performed without reception of any channel state information, transmission of the channel state information can be omitted and the data rate is further increased. This alternative performs better in case of imperfect channel reciprocity.

Advantageously in this case, said fourth training data and said second payload data are precoded based on a second precoding eigenbeamforming matrix, said transmitting unit is adapted to transmit second training data and said second eigenbeamforming precoding matrix is based on the transmitted second training data.

The problem is further solved by a communication system comprising at least one transceiver according to the present invention. The communication system may e.g. be a Power Line Communication System.

The problem is further solved by a method of communication between a first communication device and a second communication device via a bidirectional communication channel comprising steps of transmitting first training data from said second communication device to said first communication device, calculating at said first communication device a first eigenbeamforming precoding matrix based on the transmitted first training data, precoding first payload data based on the calculated first eigenbeamforming precoding matrix and transmitting the precoded first payload data

2

from the first communication device to the second communication device, according to claim 8.

Advantageously, the method comprises steps of precoding second payload data based on a second eigenbeamforming precoding matrix, transmitting the precoded second payload data from the second communication device to the first communication device, calculating at said first communication device first channel state information based on the received first training data and decoding the received precoded second payload data based on said first channel state information.

Advantageously in this case, said step of decoding the received precoded second payload data is based on an eigenbeamforming detection matrix comprised in said first channel state information. Further advantageous in this case, the method comprises steps of transmitting second training data from said first communication device to said second communication device and calculating at said second communication device said second precoding matrix based on the transmitted second training data.

Alternatively, the method comprises steps of precoding fourth training data based on a second eigenbeamforming precoding matrix, precoding second payload data based on said second eigenbeamforming precoding matrix, transmitting the precoded fourth training data from said second communication device to said first communication device, transmitting the precoded second payload data from said second communication device to said first communication device, calculating at said first communication device second channel state information based on the transmitted precoded fourth training data, and decoding the received second payload data based on said second channel state information.

Advantageously in this case, the method comprises a step of transmitting second training data from said first communication device to said second communication device, wherein said second eigenbeamforming precoding matrix is based on the transmitted second training data.

Brief description of the drawings

The present invention is explained in detail below with reference to drawings, in which

Fig. 1 shows embodiments of the transceiver 1 and the communication system 3 according to the present invention,

Fig. 2 shows the basic principle of eigenbeamforming,

Fig. 3 shows a representation of the result of eigenbeamforming,

Fig. 4 shows a transmitter comprised in first and second embodiments of the transceiver according to the present invention,

Fig. 5 shows a receiver comprised in first and second embodiments of the transceiver according to the present invention,

Fig. 6 shows a message passing diagram according to a first embodiment of the present invention,

Fig. 7 shows a message passing diagram according to a second embodiment of the present invention,

Fig. 8 shows a flow diagram of a method performed by the transceiver of the second embodiment,

Fig. 9 shows a message passing diagram according to a modified first embodiment of the present invention.

Fig. 10 shows a diagram of channel characteristics as seen by a first transceiver M1 and

Fig. 11 show a diagram of channel characteristics as seen by a second transceiver M2.

Description of the preferred embodiments

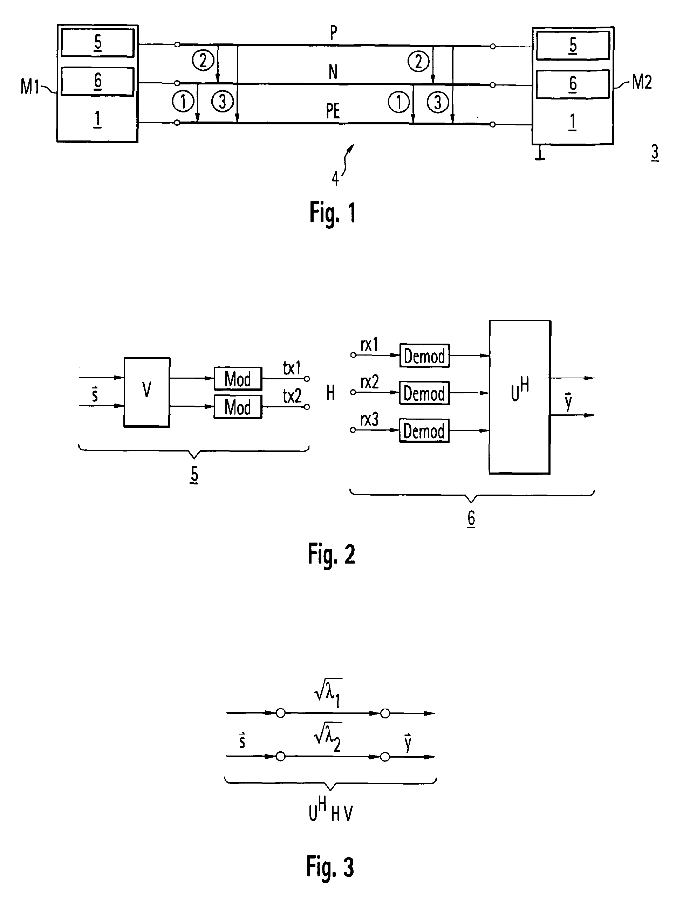

Fig.1 shows embodiments of the transceiver 1 and the communication system 3 of the present invention. In the embodiment shown in Fig. 1 the communication system 3 comprises two transceivers 1. The first transceiver 1 is referred to by M1, the second transceiver 1 is referred to by M2. The M1 and the M2 are connected by a bidirectional communication channel 4. The transceivers 1 may be stand-alone devices (e.g. modems) or may be integrated in other electronic devices (e.g. consumer electronic devices like a hard disk recorder, a television, an audio amplifier, a personal computer or any other suitable device) which take advantage of the communication provided by the transceivers 1.

Typically, the communication system 3 does not comprise the channel 4. The communication channel 4 is depicted in Fig. 1 as a PLC channel 4. Other bidirectional communication channels 4 are possible, however, including any kind of wired and wireless bidirectional communication channels 4. Each transceiver 1 comprises a transmitter 5 and a receiver 6 which could be combined in a single elemenet.

For describing the principle of eigenbeamforming, it is assumed that the channel 4 is described by a complex channel matrix H, whereby the columns correspond to input ports of the communication channel 4 (transmit ports of a transmitter) and rows correspond to output ports of the communication channel 4 (receive ports of a receiver).

$$ \mathrm{H} = \begin{pmatrix} h_{11} & h_{12} \\ h_{21} & h_{22} \\ h_{31} & h_{32} \end{pmatrix} \qquad (1) $$

For the purpose of explanation only, H is assumed to be a (3x2)-matrix. Generally, the number of transmit ports is $nt \geq 2$ and the number of receive ports is nr. Eigenbeamforming is a very effective transmission method, since it achieves full spatial coderate (i.e. nt symbols per timeslot) and full spatial diversity (i.e. diversity order = nt*nr).

By means of a singular value decomposition (SVD), the channel matrix H can be written as

$$ \mathrm{H} = \mathrm{U}\,\mathrm{D}\,\mathrm{V}^{\mathrm{H}} \qquad (2) $$

$$ (3 \times 2) = (3 \times 3)(3 \times 2)(2 \times 2) $$

where U and V are unitary matrices (i.e. and $V^{-1} = V^{H}$ and $U^{-1} = U^{H}$), the superscript H indicates the Hermitian transpose, the superscript -1 indicates the inverse,

$$ \mathrm{D} = \begin{pmatrix} \sqrt{\lambda_1} & 0 \\ 0 & \sqrt{\lambda_2} \\ 0 & 0 \end{pmatrix} \qquad (3) $$

wherein $\lambda_1$ and $\lambda_2$ are called singular values. The matrix H corresponds to channel state information. A SVD of a matrix H corresponds to a specific representation of the channel state information H. Hermitian transposition is an operation of very low computational complexity. Hermitian transposition might be obtained by a simple reinterpretation of matrix data. Therefore, instead of transmitting a matrix M, the matrix $M^{H}$ might be transmitted and vice versa.

As is shown in Fig. 2, the transmitter 5 precodes the two symbols to be sent on the two transmit ports (tx1, tx2) with the matrix V. The matrix V is called an eigenbeamforming precoding matrix or precoding matrix. The matrix VH might also be called an eigenbeamforming precoding matrix or precoding matrix. Still VH must be applied an not V. ! interpretation! The transmitter 5 may further apply a modulation "mod" for transmission over the communication channel 4 according to implementation circumstances. The receiver 6 can then apply the transformation $U^{H}$ on the three symbols received on the three receive ports (rx1, rx2, rx3). The matrix $U^{H}$ is called an eigenbeamforming detection matrix or detection matrix. The operation of applying the detection matrix $U^{H}$ is called eigenbeamforming detection or detection. The receiver 6 may further apply a demodulation "demod" corresponding to the modulation "mod". If $s$ is the vector of the two symbols sent, the vector y of the three received and transformed symbols is then

$$ y = \mathrm{U}^{\mathrm{H}}\mathrm{HV}s = \mathrm{U}^{\mathrm{H}}\mathrm{UDV}^{\mathrm{H}}\mathrm{V}s = \mathrm{D}s \,. \qquad (4) $$

One row of D is all zero and is of no interest. The remainder of D is a diagonal matrix. Thus, the channel 4 is decomposed into a set of two parallel and independent paths, as is depicted in Fig. 3.

The input symbols may, for example, be finally recovered (decoded) according to

$$s_1 = \left(\sqrt{\lambda_1}\right)^{-1} y_1 \qquad\qquad\qquad (5)$$

$$s_2 = \left(\sqrt{\lambda_2}\right)^{-1} y_2$$

which, in the following, is referred to by $D^{-1}$. This scheme requires knowledge of channel state information (CSI) at both the transmitter and the receiver. In particular, it requires the knowledge of V at the transmitter and the knowledge of $D^{-1}$ and $U^H$ at the receiver. Typically, estimation of the channel matrix H is performed by the receiver 2, which is therefore in knowledge of U, D and $V^H$ (and $U^H$, $D^{-1}$ and V). CSI must therefore be transmitted from the receiver 2 to the transmitter 1, which increases the overhead and decreases the data rate. The described way of decoding (i.e. applying $U^H$ and $D^{-1}$) does not take into account any noise and simply "inverses" the channel matrix H. It can therefore be seen as a specific type of zero-forcing decoding. Other decoding methods are possible, however.

According to the present invention, in contrast to the above, transmission of CSI can be omitted when it is assumed that the communication channel 4 is reciprocal. For a reciprocal communication channel 4, the channel transfer function is the same (at least there is a one-to-one relationship) for both communication directions of a bidirectional communication. Therefore, the channel matrix H is the same (at least there is a one-to-one relationship) for both communication directions of a bidirectional communication. The transmission of CSI increases protocol overhead and reduces the effective data rate (payload data rate). Thus, the present invention provides for an increased data rate.

When using precoding, encoding, decoding, detecting with or by a matrix, applying a matrix etc., the matrix is seen as a linear operator. Precoding, encoding, decoding, detecting with or by a matrix, applying a matrix etc. thus corresponds to a multiplication (left-multiplication) of a vector or other matrix with the matrix as, for example, in equation (4). The notion "based on a matrix" however is not limited in this way or any other way.

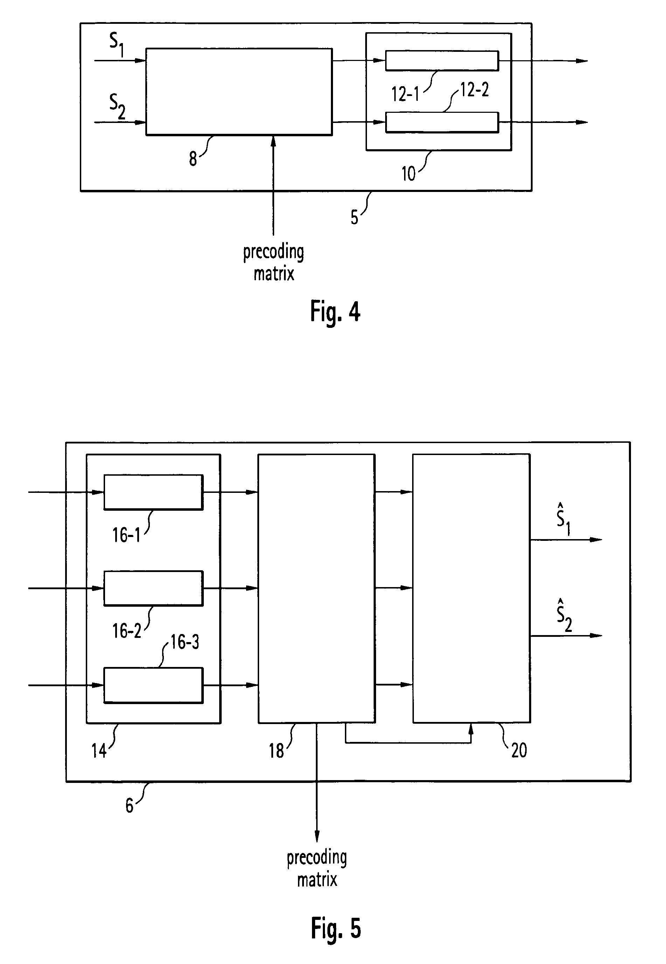

A transceiver 1 according to a first and a second embodiment of the present invention will now be described with reference to Fig. 4 and Fig. 5.

Fig. 4 shows a schematic diagram of the transmitter 5 of the transceiver 1. The transmitter 5 comprises a precoder 8 for precoding symbols s to be transmitted with a precoding matrix. The precoder 8 might be bypassed or the precoder 8 might apply a trivial identity precoding in order to transmit unprecoded symbols s. The transmitter 5 receives the precoding matrix from the receiver 6 of the transmitter 1. The (precoded) symbols are transmitted by a transmission unit 10 over the communication channel 4. The transmission unit 10 comprises a modulator 12 for each transmission path. The modulators 12-1, 12-2 may, for example, be OFDM modulators.

Fig. 5 shows a schematic diagram of the receiver 6 of the transceiver 1. The receiver 6 comprises a receiving unit 14 for receiving symbols via the communication channel 4. The receiving unit 14 comprises a demodulator 16 for each receive path. The demodulators 16-1, 16-2, 16-3 may, for example, be OFDM demodulators. The receiver 6 further comprises a channel estimator 18. The channel estimator 18 determines CSI based on received training symbols. Training symbols are symbols which are known to the transceiver 1. Training symbols and their usage are well known to the skilled person. The channel estimator 18 determines a channel matrix H based on the received training symbols. Further, the channel estimator may calculate a SVD of the channel matrix H according to equation (2) (the channel estimator 18 calculates at least $V^H$). The channel estimator 18 provides the precoding matrix to the transmitter 5. The receiver 6 further comprises a decoder 20. The decoder 20 receives CSI from the channel estimator 18. For example, the decoder 20 receives the channel matrix H or the SVD of the channel matrix H from the channel estimator 18. The decoder 20 decodes the received symbols and obtains estimates $\hat{s}$ of the transmitted symbols s. The decoder 20 may, for example, be a zero forcing (ZF) decoder, a minimum mean square error (MMSE) decoder or a maximum likelihood (ML) decoder.

The transceiver 1, the transmitter 5 and the receiver 6 may comprise other components than the ones depicted as is obvious to the skilled person. These include, for example, QAM modulators, QAM demodulators, digital-to-analogue converters and analogue-to-digital converters, power supplies, synchronization circuits, frequency generators, parallel-to-serial converters, serial-to-parallel converters, memories, controllers, CPUs, and other units and devices known now or in the future by the skilled person.

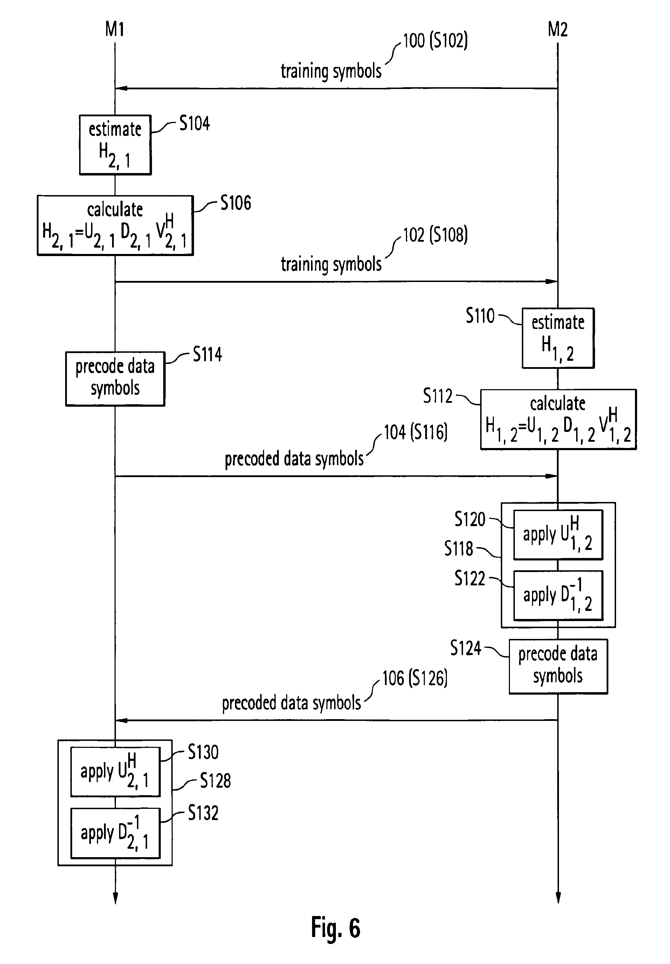

A message passing chart depicted in Fig. 6 according to the first embodiment of the present invention is now explained. In the chart, time goes from top to bottom. However, the steps may be reordered in time in many ways. Such reordering is limited only in case an output or result of one step is required as input to another step. Method steps depicted on the left and right side are executed by the M1 and the M2, respectively. Transmission of a signal, information, a symbol etc. always includes transmitting the signal, information, symbol etc. at the transmitter 5 of a transceiver 1 (e.g. the M1) and receiving the signal, information, symbol etc. at the receiver 6 of the other transceiver 1 (e.g. the M2).

In a step S102, first training symbols 100 are transmitted from the M2 to the M1 via the communication channel 4.

In a step S104, the M1 estimates (calculates) the channel matrix $H_{2,1}$ based on the first training symbols 100 transmitted in step S102.

In a step S106, the M1 calculates a SVD of $H_{2,1}$, thereby obtaining $U_{2,1}$, $D_{2,1}$ and $V_{2,1}^H$.

In a step S108, second training symbols 102 are transmitted from the M1 to the M2 via the communication channel 4.

In a step S110, the M2 estimates (calculates) the channel matrix $H_{1,2}$ based on the second training symbols 102 transmitted in step S108.

In a step S112, the M2 calculates a SVD of $H_{1,2}$, thereby obtaining $U_{1,2}$, $D_{1,2}$ and $V_{1,2}^H$.

In a step S114, the M1 precodes (encodes) to be transmitted first payload data symbols 104 with the precoding matrix $V_{2,1}$.

In a step S116, the precoded first payload data symbols 104 are transmitted from the M1 to the M2 via the communication channel 4.

In a step S118, the M2 decodes the first payload data symbols 104 received in step S116 based on $H_{1,2}$. The step S118 may comprise, for example, steps S120 and S122. In step S120, the M2 performs an eigenbeamforming detection by applying $U_{1,2}^H$ to the received first payload data symbols 104. In step S122, the M2 finally decodes the first payload data symbols 104, for example, by applying $D_{1,2}^{-1}$ to the result of step S120.

In a step S124, the M2 precodes (encodes) to be transmitted second payload data symbols 106 with the precoding matrix $V_{1,2}$.

In a step S126, the precoded second data symbols 106 are transmitted from the M2 to the M1 via the communication channel 4.

In a step S128, the M1 decodes the second payload data symbols 106 received in step S126 based on $H_{2,1}$. The step S128 may comprise, for example, steps S130 and S132. In step S130, the M1 performs an eigenbeamforming detection by applying $U_{2,1}^H$ to the received second payload data symbols 106. In step S132, the M1 finally decodes the second payload data symbols 106, for example by applying $D_{2,1}^{-1}$ to the result of step S130.

The above scheme is repeated in order to transmit further payload data, that is, after step S128 the method returns to step S102. Alternatively, only the steps S114 to S128 are repeated (unconditionally). In this case, in order to provide for an adaption to varying channel conditions, the steps S102 to S112 might be repeated once every time the communication channel 4 changes (is determined to have changed) as is explained below in relation to the second embodiment (setup/adaption mode and operative transmission mode).

In the first embodiment the communication channel 4 is assumed to be reciprocal or close to reciprocal. A second embodiment of the present invention, which is explained in the following, is better suited to provide communication on the communication channel 4 when the degree of violation of channel reciprocity increases.

When the transfer functions (the communication channel 4) are not perfect reciprocal, the transmitter 5 will operate based on an imperfect precoding matrix V and the communication channel 4 is not perfectly decomposed into the set of parallel and independent paths. This means that an amount of interchannel interference between the paths is introduced. However, when the receiver 6 has information about the actually used precoding matrix, it can correct the channel interference with an appropriate decoding.

Let V be the precoding matrix used by the transmitter 5. When the precoder 8 is seen as comprised in the communication channel between the transmitter 5 and the receiver 6, the communication channel can be described by an equivalent channel matrix

$$\widetilde{H} = H\widetilde{V} . \qquad (6)$$

In order for the receiver 6 to obtain the knowledge of the equivalent channel matrix H, the training symbols that are used for channel estimation are also precoded (multiplied) with the precoding matrix $\widetilde{V}$. In this case, when the channel estimator 18 performs normal channel estimation, it automatically determines $\widetilde{H}$ instead of H. Given $\widetilde{H}$, the decoding can be done similar to the case of conventional spatial multiplexing, for example, with a zero forcing (ZF) algorithm, a minimum mean squared error (MMSE) algorithm, or a maximum likelihood (ML) algorithm. In the case of ZF, for example, a decoding matrix is the pseudo inverse of the (equivalent) channel matrix $\widetilde{H}$:

$$\widetilde{H}_{p} = \left[\widetilde{H}^{H}\widetilde{H}\right]^{-1}\widetilde{H}^{H} , \qquad\qquad (7)$$

whereby decoding is obtained according to

$$\hat{s} = \widetilde{H}_{p}\, y . \qquad\qquad (8)$$

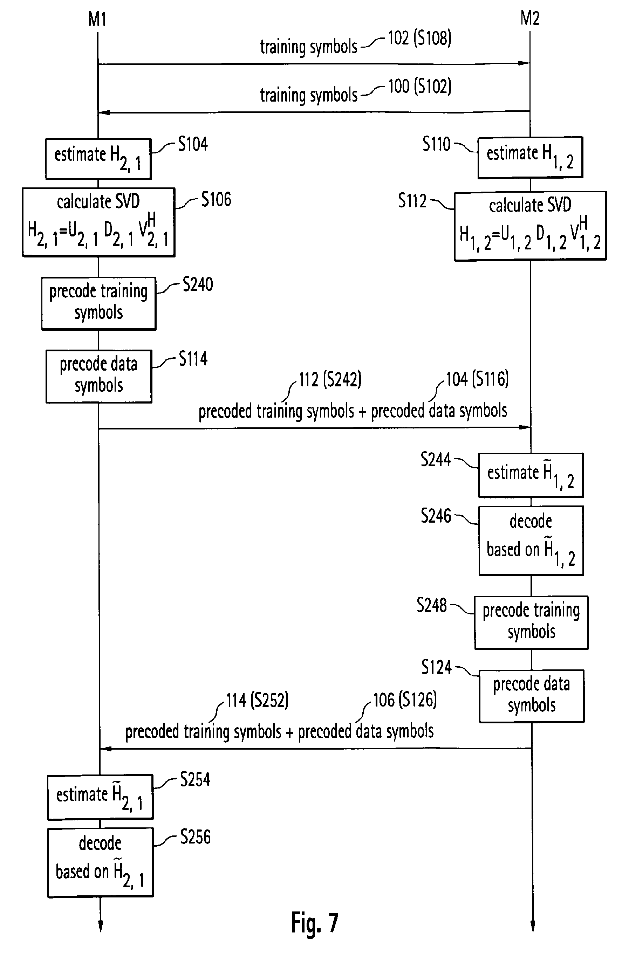

A message passing diagram depicted in Fig. 7 according to the second embodiment of the present invention is now explained. In the chart, time goes from top to bottom. However, the steps may be reordered in time in many ways. Such reordering is limited only in case an output or result of one step is required as input to another step. Method steps depicted on the left and right side are executed by the M1 and the M2, respectively. Transmission of a signal, information, symbol etc. always includes transmitting the signal, information, symbol etc. at the transmitter 5 of a transceiver 1 (e.g. the M2) and receiving the signal, information, symbol etc. at the receiver 6 of the other transceiver 1 (e.g. the M1).

In a step S108, second training symbols 102 are transmitted from the M1 to the M2 via the communication channel 4.

In a step S102, first training symbols 100 are transmitted from the M2 to the M1 via the communication channel 4.

In a step S104, the M1 estimates (calculates) the channel matrix $H_{2,1}$ based on the first training symbols 100 transmitted in step S102.

In a step S106, the M1 calculates a SVD of $H_{2,1}$, thereby obtaining $U_{2,1}$, $D_{2,1}$ and $V_{2,1}{}^{H}$.

In a step S110, the M2 estimates (calculates) the channel matrix $H_{1,2}$ based on the second training symbols 102 transmitted in step S108.

In a step S112, the M2 calculates a SVD of $H_{1,2}$, thereby obtaining $U_{1,2}$, $D_{1,2}$ and $V_{1,2}{}^{H}$.

The above steps S102 to S112 correspond to a setup/adaption mode. The following steps S240 to 265 correspond to an operative transmission mode.

In a step S240, the M1 precodes (encodes) third training symbols 112 with the precoding matrix $V_{2,1}$.

In a step S114, the M1 precodes (encodes) to be transmitted first payload data symbols 104 with the precoding matrix $V_{2,1}$.

In a step S242, the precoded third training symbols 112 are transmitted from the M1 to the M2 via the communication channel 4.

In a step S116, the precoded first payload data symbols 104 are transmitted from the M1 to the M2.

In a step S244, the M2 estimates (calculates) the equivalent channel matrix $\widetilde{H}_{1,2}$ based on the received precoded third training symbols.

In a step S246, the M2 decodes the received first payload data symbols 104 based on the equivalent channel matrix $\widetilde{H}_{1,2}$.

In a step S248, the M2 precodes (encodes) fourth training symbols 114 with the precoding matrix $V_{1,2}$.

In a step S124, the M2 precodes (encodes) to be transmitted second payload data symbols 106 with the precoding matrix $V_{1,2}$.

In a step S252, the precoded fourth training symbols 114 are transmitted from the M2 to the M1 via the communication channel 4.

In a step S126, the precoded second payload data symbols 106 are transmitted from the M2 to the M1.

In a step S254, the M1 estimates (calculates) the equivalent channel matrix $\widetilde{H}_{2,1}$ based on the received precoded fourth training symbols 114.

In a step S256, the M1 decodes the received second payload data symbols 106 based on the equivalent channel matrix $\widetilde{H}_{2,1}$.

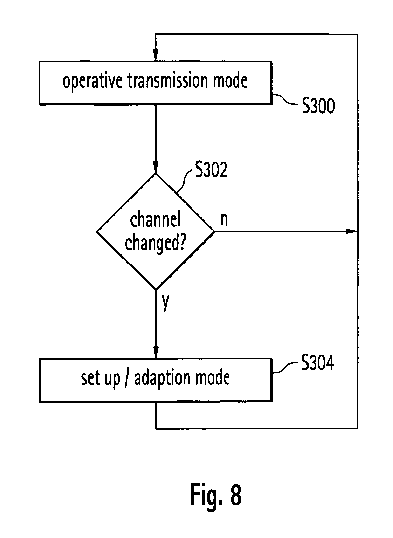

In order to transmit further payload data, the above steps S240 to S256 corresponding to the operative transmission mode are repeated. In this case, when the channel conditions do change, eventually a non-ideal eigenbeamforming is applied, which results in a higher bit error rate and, thus, a lower effective data rate. In order to provide for a system which performs better in case of varying channel conditions, the steps S102 to S112 of the setup/adaption mode are repeated, for example, at regular intervals or when a change of the channel conditions is detected. An example method corresponding to the latter case is depicted in Fig. 8.

In a step S300, the M2 (the M1) 3 is in the operative transmission mode.

In a step S302, the M2 (the M1) determines if the channel conditions have changed. To achieve this, the M2 (the M1) evaluates a criteria which may be chosen by the skilled person according to implementation circumstances.

The determination if the channel 4 has changed may, for example, be based on the received precoded training symbols 112 (the received precoded training symbols 114). For example, a current estimate of $\tilde{H}_{1,2}$ (of $\tilde{H}_{2,1}$) might be compared to a previously stored (e.g. the preceding) estimate of $\tilde{H}_{1,2}$ (of $\tilde{H}_{2,1}$). Thus, step S302 may, for example, be executed everytime after step S244 (step S254). Alternatively or additionally, the determination if the channel 4 has changed may, for example, be based on a bit error rate. A bit error rate may be determined, for example, based on an error correction or error detection code. For example, the M1 (the M2) encodes payload data with an error correction or detection code and the M2 (the M1) decodes the received payload data with the error detection code. In the decoding process, a bit error rate can be determined. When the bit error rate is above a threshold, the channel 4 is determined to have changed (significantly) otherwise the channel is determined not to have changed (significantly). Thus, step S302 may, for example, be executed every time after step S246 (step S256). Of course, behaviour of the modems M1 and M2 must be synchronized which can be done by means and methods known to the skilled person. In case the channel conditions are determined to have changed, the method proceeds to step S304. If not, the method returns to step S300 and the M2 (the M1) continues in operative transmission mode.

In a step S304, the M2 (the M1) enters setup/adaptive mode, that is, performs the steps of the setup/adaptive mode pertaining to the M2 (the M1). Thereafter, the method returns to step S300 and the M2 (the M1) returns to operative transmission mode.

In the setup mode, when compared to a state of the art eigenbeamforming with feedback of CSI, the second embodiment has the advantage that the precoding matrices $V_{1,2}$ and $V_{2,1}$ do not have to be exchanged. Thus, a setup delay is reduced. When a channel change has occurred, still the matrices $V_{1,2}$ and $V_{2,1}$ do not have to be exchanged, however, both H and H must be determined. Therefore, when compared to a state of the art eigenbeamforming with feedback of CSI, additional training symbols have to be transmitted. Transmission of the additional training symbols however requires less channel resources as transmission of the CSI. To illustrate this, the following example is given: Given two transmission paths, the precoding matrix V is a 2x2 matrix, which results in 4 values to be transmitted for each precoding matrix. Given these four values are quantized with 16 bit, this amounts to 4* 16=64 bit per precoding matrix V. Using a robust modulation like QPSK with a rate of 2 bits per symbol, 64/2=32 symbols are required for feeding back the precoding matrix V. Given that four training symbols are used for the channel estimation in one direction, a gain factor of 32/4=8 is obtained. This factor is even higher, when the precoding matrix V is transmitted as part of a burst (which is the case in many transmission systems), since every burst comprises additional training symbols as is explained below. The above example is readily applicable to the case of OFDM systems. In this case, the 64 bits per precoding matrix are required per subcarrier. When every subcarrier is modulated with a robust 2-bit modulation scheme, 32 OFDM symbols are required to transmit the precoding matrix V. Given that four training symbols are required for channel estimation, this results again in a gain factor of eight.

The number of training symbols that are transmitted during setup or during adaption mode after a channel change has been detected may be less than during regular operative transmission mode when no channel change has been detected. As long as the channel does not change strongly, there is no need for an extensive channel estimation. Thereby, valuable transmission time is saved and the effective data rate can be increased. Synchronisation might be based on the training symbols, which provides a reason for not completely omitting the training symbols in this case.

In the above methods, the training and payload data symbols may be transmitted as part of bursts, for example, as part of OFDM bursts. Bursts comprise a preamble and a data portion (which might be empty or omitted), whereby the preamble is transmitted before the data portion. The preamble comprises the training symbols and is used, inter alia, for synchronisation and channel estimation. The data portion comprises the payload data.

In the second embodiment, for example, the first training symbols 100 might be transmitted in a first burst and the second training symbols 102 might be transmitted in a second burst. The first and second bursts may be bursts without a payload portion or with an empty payload portion. Further, the third training symbols 112 and the first payload data symbols 104 might be transmitted in the preamble and the data portion of a third burst, respectively, and the fourth training symbols 114 and the second payload data symbols 106 might be transmitted in the preamble and the data portion of a fourth burst, respectively.

Also, in the first embodiment, the second training symbols 102 and the first payload data symbols 104 might be transmitted in the preamble and the data portion of a first bursts, respectively, and the first training symbols 100 and the second payload data symbols 106 might be transmitted in the preamble and the data portion of a second burst respectively. Of course, during setup or after a change of channel conditions, the data portion of a burst may be empty or omitted, so that only the corresponding training sequence is transmitted.

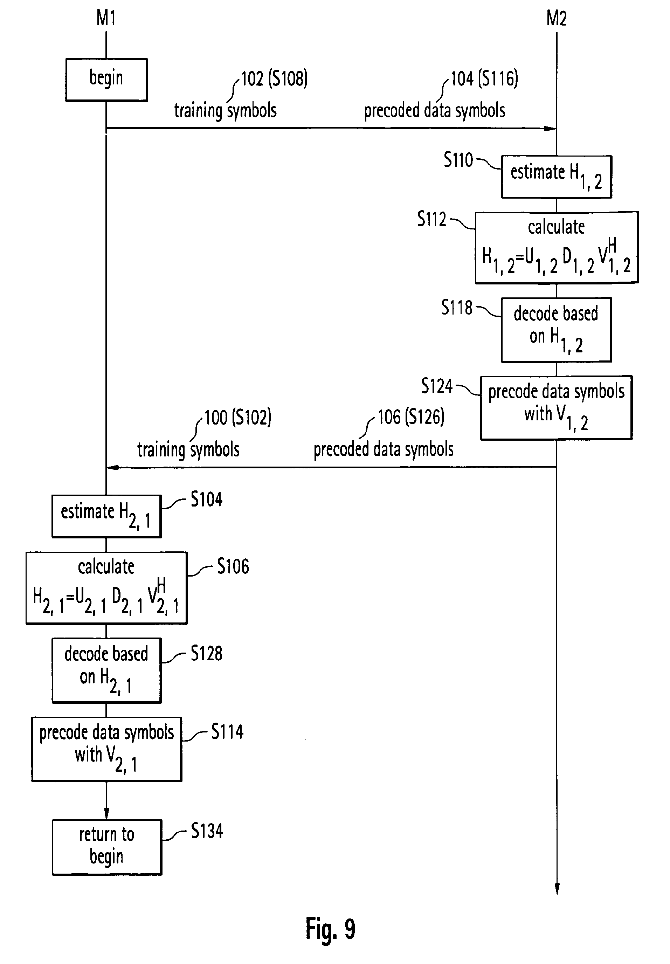

Fig. 9 shows a modified diagram (corresponding to a modified first embodiment) of the message passing diagram of Fig. 6. The precoded payload data symbols 104, 106 and the training symbols 100, 102 are transmitted as parts of bursts as described above. Except for the reordering, the steps S102 to S128 (i.e. the steps S102, S104, S106, S108, S110, S112, S114, S116, S118, S124, S126, S128) are the same as in Fig. 6, description of the steps is therefore omitted. The steps S116 and S118 are executed only in operative transmission mode. In setup/adaption mode, the steps S116 and S118 are not executed. The method begins in step S100. After step S114, the method returns to step S100.

As already indicated above, the communication channel 4 might be a PLC channel. Normally, the PLC channel 4 comprises three wires: P (phase or live), N (neutral) and PE (protective earth) as is depicted in Fig. 1. In the embodiments, signals are feed differentially into the transmission medium 4. There are three possibilities for differential signal feeding: N with PE, P with PE and P with N. However, according to Kirchhoff's rule, the sum of the three input signals has to be zero. Therefore only two out of the three (generally $n$-1 out of $n$) differential input ports can be used simultaneously. On the receiving side, however, all three differential reception ports can be used. Due to electromagnetic coupling between adjacent wires, crosstalk arises, that is, the transmit signals from any feeding port is visible on all three reception ports. While, for the purpose of the explanation, the PLC channel 4 is assumed to have three wires - which is most common -, PLC channels 4 with more or less than three wires are possible.

For eigenbeamforming, only the channel transfer functions are required (i.e. the complex attenuation at the different frequencies). Knowledge of noise on the channel is not required. When neglecting noise sources, the PLC channel 4 can be considered to be a passive quadripole. It is well known, that passive quadripoles are reciprocal. If the load resistances are equal at both sides of the quadripole, then the transfer functions in both directions are also equal. In other words, the PLC channel 4 is a reciprocal communication channel. As was seen above, CSI is required at the transmitter 5. At least the precoding matrix V has to be known at the transmitter 5. If the transfer functions between each transmitting port and each receiving port are reciprocal, then the channel matrix H and, therefore, the precoding matrix V are reciprocal. As a practical consequence, a precoding matrix V determined for communication in one direction of a reciprocal bidirectional communication channel 4 can equally be used as a precoding matrix V for communication into the opposite direction of the reciprocal bidirectional communication channel 4.

The following table defines the channel coefficients $h_{ij}$ of different MIMO paths between the different differential input and output ports in an example in which N-PE and P-N are used as the differential feeding ports.

|          | N-PE(1)    | P-N(2)     |
| -------- | ---------- | ---------- |
| N-PE(1)  | $h_{11}$   | $h_{12}$   |
| P-N(2)   | $h_{21}$   | $h_{22}$   |
| P-PE(3)  | $h_{31}$   | $h_{32}$   |

Provided that the matrix elements $h_{ij}$ are not frequency dependent, the description with the channel matrix H assumes that the communication channel 4 is frequency-flat. The PLC-MIMO channel 4, however, is frequency selective. To remedy this, the channel 4 may be divided (in terms of frequency) into sufficiently small, frequency-flat subchannels so that each subchannel can be described with a separate channel matrix H. This may be achieved with the help of OFDM, whereby each OFDM subcarrier is described by a separate channel matrix H. As already indicated above, the transceivers 1 may be OFDM transceivers. It is to be noted that channel estimation, singular value decomposition, precoding, decoding, detection etc. must be performed for every OFDM subcarrier.

The reciprocal property holds only for the transfer functions but not for the noise. Therefore, adaption patterns of adaption schemes which choose a modulation scheme according to a signal-to-noise ratio (SNR) (like e.g. adaptive OFDM) are not reciprocal. These SNR values differ on the transmitter side and the receiver side, since noise sources (noise devices) have a different effect on the transmitter 5 and the receiver 6 depending, for example, on their location relative to the transmitter 5 and the receiver 6.

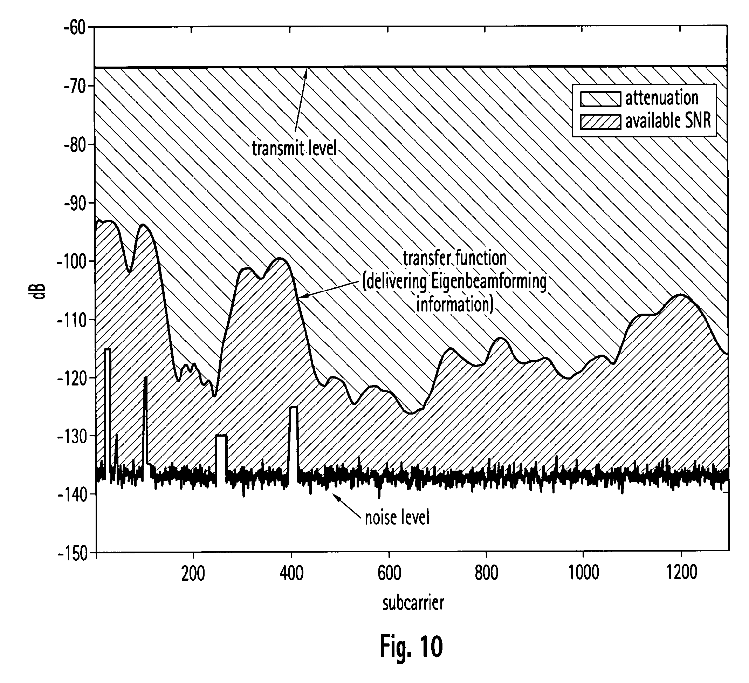

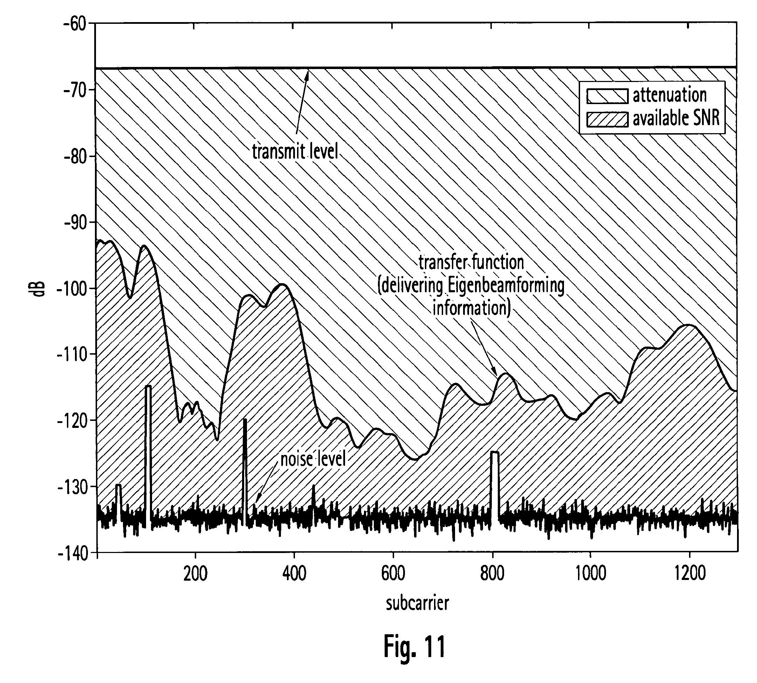

This is depicted in Figs. 10 and 11. Figs. 10 and 11 show an example of the transfer function of the first MIMO path after decomposition by the SVD (i.e. $\lambda_1$) and the noise level for each subcarrier (frequency) for the M1 and the M2, respectively. While the transfer function is the same for both of M1 and M2, the noise level is different. This results in a different SNR for each subcarrier. The light grey height corresponds to the attenuation, the dark grey height corresponds to the SNR. Therefore the corresponding pattern of adaptive modulation, which depends on the SNR, is different for both directions of the communication channel 4 and has to be feedback (transmitted) from one transceiver 1 (e.g. M2) to the other transceiver 1 (e.g. M1).

Eigenbeamforming is a very good choice for MIMO-PLC since it achieves the full spatial coderate and the full spatial diversity (i.e. maximum diversity order).

In the above, it has been assumed that there are three reception paths in case of three wires. However, a fourth reception path, the so called common mode path (CM path) may be made us of. Common Mode signals are created unintentionally at unbalanced networks. Unbalanced parasitic capacities from installations or devices to ground cause a CM current returning to the source. CM signals on power lines are less attenuated than differential mode (DM) signals. At links with high attenuation, the CM signal might even be stronger at the receiver 6 than DM signals.

The following table defines the channel coefficients $h_{ij}$ of different MIMO paths between the different differential input and output ports in an example in which N-PE and P-N are used as the differential feeding ports with the CM path included.

|  | N-PE(1) | P-N(2) |
|---|---|---|
| N-PE(1) | $h_{11}$ | $h_{12}$ |
| P-N(2) | $h_{21}$ | $h_{22}$ |
| P-PE(3) | $h_{31}$ | $h_{32}$ |
| CM (4) | $h_{41}$ | $h_{42}$ |

Which corresponds to a channel matrix

$$H = \begin{pmatrix} h_{11} & h_{12} \\ h_{21} & h_{22} \\ h_{31} & h_{32} \\ h_{41} & h_{42} \end{pmatrix}. \qquad (9)$$

Given the matrix H, eigenbeamforming is essentially the same as for the case of the receive paths. Unfortunately, the described reciprocal behaviour is not true for the CM path: The unbalanced parasitic capacities differ from device to device. Therefore, the load resistance on the CM path is different for each device. Therefore, channel state information (e.g. the matrix values $h_{41}$ and $h_{42}$) for the CM path has to be feedback (transmitted) from one transceiver 1 (e.g. M2) to the other transceiver 1 (e.g. M1). Since the CSI feedback is restricted to the CM path, the overall feedback data amount is still reduced. Feedback of the CM-CSI can be accomplished in any way. For example, in case of an adaptive OFDM system, the CM-CSI data can be transmitted together with or in the same way as the patterns of adaptive modulation. Various ways of transmitting these patterns are known in the art.

The present invention has been explained with reference to specific embodiments. This is by way of example only and it clear to those skilled in the art that various modifications may be made without departing from the scope of the following claims.

**Claims**

1. A transceiver (1) comprising

   a receiving unit (14) adapted to receive first training data (100),
   a channel estimator (18) adapted to calculate a first eigenbeamforming precoding matrix based on the received first training data (100),
   an eigenbeamformer (8) adapted to precode first payload data based on the calculated first precoding matrix and
   a transmitting unit (10) adapted to transmit the precoded first payload data (104).

2. A transceiver (1) according to claim 1
   wherein

   said receiving unit (14) is adapted to receive second payload data (106), said second payload data being precoded,
   said channel estimator (18) is adapted to calculate first channel state information based on said received first training data (100),
   said transceiver (1) comprising
   a decoder (20) adapted to decode the received precoded second payload data (106) based on said first channel state information.

3. A transceiver (1) according to claim 2 wherein

said first channel state information based on which said decoder (20) decodes said received precoded second payload data (106) comprises an eigenbeamforming detection matrix.

4. A transceiver (1) according to claim 2 or 3 wherein

said second payload data (106) is precoded based on a second precoding eigenbeamforming matrix,
said transmitting unit (10) is adapted to transmit second training data (102) and
said second eigenbeamforming precoding matrix is based on the transmitted second training data (102).

5. A transceiver (1) according to claim 1 wherein

said receiving unit (14) is adapted to receive fourth training data (114), said fourth training data (114) being precoded,
said receiving unit (14) is adapted to receive second payload data (106), said second payload data (106) being precoded,
said channel estimator (18) is adapted to calculate second channel state information based on the received fourth training data (114),
said transceiver (1) comprising
a decoder (20) adapted to decode the received precoded second payload data (106) based on said second channel state information.

6. A transceiver (1) according to claim 5 wherein

said fourth training data (114) and said second payload data (106) are precoded based on a second precoding eigenbeamforming matrix,
said transmitting unit (10) is adapted to transmit second training data (102) and
said second eigenbeamforming precoding matrix is based on the transmitted second training data (102).

7. A communication system (3) comprising at least one transceiver (1) according to any one of the above claims.

8. A method of communication between a first communication device (M1) and a second communication device (M2) via a bidirectional communication channel (4) comprising steps of

transmitting (S102) first training data (100) from said second communication device (M2) to said first communication device (M1),
calculating (S104, S106) at said first communication device (M1) a first eigenbeamforming precoding matrix based on the transmitted first training data (100),
precoding (S114) first payload data based on the calculated first eigenbeamforming precoding matrix and
transmitting (S116) the precoded first payload data (104) from the first communication device (M1) to the second communication device (M2).

9. A method according to claim 8 comprising steps of

precoding (S124) second payload data (106) based on a second eigenbeamforming precoding matrix,
transmitting (S126) the precoded second payload data (106) from the second communication device (M2) to the first communication device (M1),
calculating (S104, S106) at said first communication device (M1) first channel state information based on the received first training data (100) and
decoding (S128) the received precoded second payload data (106) based on said first channel state information.

10. A method according to claim 9 wherein

said step of decoding (S128) the received precoded second payload data is based on an eigenbeamforming detection matrix comprised in said first channel state information.

11. A method according to claim 9 or 10 comprising steps of

transmitting (S108) second training data (102) from said first communication device (M1) to said second communication device (M2) and
calculating (S110, S112) at said second communication device (M2) said second precoding matrix based on the transmitted second training data (102).

**12.** A method according to claim 8 comprising steps of

precoding (S248) fourth training data (114) based on a second eigenbeamforming precoding matrix,
precoding (S124) second payload data (106) based on said second eigenbeamforming precoding matrix,
transmitting (S252) the precoded fourth training data (114) from said second communication device (M2) to said first communication device (M1),
transmitting (S126) the precoded second payload data (106) from said second communication device (M2) to said first communication device (M1),
calculating (S254) at said first communication device (M1) second channel state information based on the transmitted precoded fourth training data (114) and
decoding (S256) the received second payload data (106) based on said second channel state information.

**13.** A method according to claim 12 comprising a step of

transmitting (S108) second training data (102) from said first communication device (M1) to said second communication device (M2), wherein
said second eigenbeamforming precoding matrix is based on the transmitted second training data (102).

P

②

N

②

M1

①        ③        PE        ①        ③

M2

4

**Fig. 1**

3

$\vec{s}$ —→ V —→ Mod → tx1

—→ Mod → tx2

5

H

rx1 → Demod →

rx2 → Demod →   $U^H$  → $\vec{y}$

rx3 → Demod →

6

**Fig. 2**

$\sqrt{\lambda_1}$

$\vec{s}$        $\sqrt{\lambda_2}$        $\vec{y}$

$U^H H V$

**Fig. 3**

S₁

S₂

12-1    12-2

8

10

5

precoding
matrix

**Fig. 4**

16-1

16-2    16-3

14    18    20

6

Ŝ₁

Ŝ₂

precoding
matrix

**Fig. 5**

Fig. 6

M1                                                                      M2

training symbols ⌐102 (S108)

training symbols ⌐100 (S102)

| estimate $H_{2,1}$ | ⌐S104 |

S110 | estimate $H_{1,2}$ |

calculate SVD ⌐S106
$H_{2,1} = U_{2,1} D_{2,1} V_{2,1}^H$

S112⌐ calculate SVD
$H_{1,2} = U_{1,2} D_{1,2} V_{1,2}^H$

precode training symbols ⌐S240

precode data symbols ⌐S114

112 (S242)     104 (S116)

precoded training symbols + precoded data symbols

S244⌐ estimate $\tilde{H}_{1,2}$

S246⌐ decode based on $\tilde{H}_{1,2}$

S248⌐ precode training symbols

S124⌐ precode data symbols

114 (S252)     106 (S126)

precoded training symbols + precoded data symbols

estimate $\tilde{H}_{2,1}$ ⌐S254

decode based on $\tilde{H}_{2,1}$ ⌐S256

**Fig. 7**

operative transmission mode — S300

S302

channel changed?    n

y

set up / adaption mode — S304

## Fig. 8

M1

M2

begin

102 (S108)
training symbols

104 (S116)
precoded data symbols

S110 — estimate $H_{1,2}$

S112 — calculate
$H_{1,2}=U_{1,2}\,D_{1,2}\,V^H_{1,2}$

S118 — decode based
on $H_{1,2}$

S124 — precode data symbols
with $V_{1,2}$

100 (S102)
training symbols

106 (S126)
precoded data symbols

estimate $H_{2,1}$ — S104

calculate
$H_{2,1}=U_{2,1}\,D_{2,1}\,V^H_{2,1}$ — S106

decode based
on $H_{2,1}$ — S128

precode data symbols
with $V_{2,1}$ — S114

return to
begin — S134

## Fig. 9

Fig. 10

Fig. 11

**European Patent Office**

**EUROPEAN SEARCH REPORT**

Application Number

EP 07 12 0679

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/038952 A (QUALCOMM INC [US]) 6 May 2004 (2004-05-06) * the whole document * ----- | 1-13 | INV. H04B7/06 |
| X | 802 11 WORKING GROUP: "IEEE 802.11n Part 11: Wireless LAN Medium Access Control (MAC) and Physical Layer (PHY) specifications: Enhancements for Higher Throughput" IEEE P802.11N/D1.0, XX, XX, March 2006 (2006-03), pages 119-125, XP002469313 * page 119, line 23 - page 120, line 13 * ----- | 1,8 | |

TECHNICAL FIELDS SEARCHED (IPC)

H04B

The present search report has been drawn up for all claims

| Place of search | Date of completion of the search | Examiner |
|---|---|---|
| The Hague | 31 March 2008 | Yang, Betty |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 2 061 160 A1

## ANNEX TO THE EUROPEAN SEARCH REPORT
## ON EUROPEAN PATENT APPLICATION NO.

EP 07 12 0679

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2008

| Patent document cited in search report | Publication date | Patent family member(s) | Publication date |
|---|---|---|---|
| WO 2004038952 A | 06-05-2004 | AU 2003287328 A1 | 13-05-2004 |
| | | BR PI0315558 A | 17-01-2006 |
| | | CA 2502804 A1 | 06-05-2004 |
| | | EP 1559209 A2 | 03-08-2005 |
| | | JP 2006504341 T | 02-02-2006 |
| | | KR 20050060105 A | 21-06-2005 |
| | | MX PA05004318 A | 26-08-2005 |
| | | US 2007086536 A1 | 19-04-2007 |
| | | US 2004087324 A1 | 06-05-2004 |

EPO FORM P0459

For more details about this annex : see Official Journal of the European Patent Office, No. 12/82